Europäisches Patentamt

European Patent Office

Office européen des brevets

(19)

(11) EP 0 733 532 B1

(12) **EUROPÄISCHE PATENTSCHRIFT**

(45) Veröffentlichungstag und Bekanntmachung des Hinweises auf die Patenterteilung:
**27.10.1999 Patentblatt 1999/43**

(51) Int. Cl.$^6$: **B60T 17/22**

(21) Anmeldenummer: 96101380.2

(22) Anmeldetag: 01.02.1996

(54) **Verfahren zur Ermittlung des Ansprechdrucks einer durch Druck betätigten Bremse in einem Fahrzeugbremssystem**

Method for determining set pressure of a pressure-actuated brake in a vehicle brake system

Procédé de détermination de la pression de déclenchement d'un frein actionné par pression dans un système de freinage de véhicule

(84) Benannte Vertragsstaaten:
**DE FR GB IT SE**

(30) Priorität: **24.03.1995 DE 19510933**

(43) Veröffentlichungstag der Anmeldung:
**25.09.1996 Patentblatt 1996/39**

(73) Patentinhaber: **WABCO GmbH**
**30453 Hannover (DE)**

(72) Erfinder:
- **Stender, Axel**
  **D-31787 Hameln (DE)**
- **Klein, Bodo**
  **D-30890 Barsinghausen (DE)**

- **Wiehen, Christian, Dr.**
  **D-30938 Burgwedel (DE)**
- **Witte, Norbert**
  **D-31515 Wunstorf (DE)**

(74) Vertreter:
**Schrödter, Manfred, Dipl.-Ing.**
**WABCO GmbH**
**Postfach 91 12 80**
**30432 Hannover (DE)**

(56) Entgegenhaltungen:
EP-A- 0 509 225        EP-A- 0 588 193
WO-A-93/12962         DE-A- 4 206 238
DE-A- 4 206 240        DE-A- 4 310 422

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 733 532 B1

**Beschreibung**

Die Erfindung betrifft ein Verfahren zur Ermittlung des Ansprechdrucks einer durch Druck betätigten Bremse in einem Fahrzeugbremssystem gemäß dem Oberbegriff der Patentansprüche 1 und 2.

Der Begriff "Bremse" im Sinne der Erfindung soll nicht nur eine einzelne, unmittelbar eine Bremskraft erzeugende, Baugruppe, sondern auch eine Mehrzahl solcher Baugruppen, aber auch die einer oder mehreren solcher Baugruppen zugehörigen Systemkomponenten wie Betätigungs-, Steuer- und Übertragungseinrichtungen stromabwärts des vom Fahrzeugführer zu betätigenden Bedienungsorgans umfassen können. Eine "Bremse" im Sinne der Erfindung kann also durchaus auch ein Bremskreis als Teil des Fahrzeugbremssystems oder die vollständige Bremsanlage eines Fahrzeugs in einem Fahrzeugzug sein.

Wird einer Bremse, ausgehend vom Atmosphärendruck, Druck zugeführt, so beginnt die Erzeugung einer Bremskraft durch die Bremse erst, wenn eine Druckerfassungseinrichtung schon einen gewissen Druck feststellt. Dieser Druck ist der Ansprechdruck. Er ist durch Ansprechwiderstände der unmittelbar die Bremskraft erzeugenden Baugruppen und, gegebenenfalls, der zwischen diesen und der Druckerfassungsstelle angeordneten Systemkomponenten bedingt.

Die Ansprechwiderstände sind beispielsweise auf Reibung und Rückstellkräfte zurückzuführen.

Es ist bekannt, den Ansprechdruck auf einem Rollenprüfstand zu ermitteln. Der Bremse wird dazu, ausgehend vom Atmosphärendruck, Druck zugeführt, bis der Rollenprüfstand eine erste Bremskraft anzeigt. Der in diesem Augenblick gemessene Druck ist der Ansprechdruck.

Das bekannte Verfahren ist umständlich, weil das Fahrzeug, welches die zu untersuchende Bremse trägt, zu einem Rollenprüfstand bewegt werden muß.

Ein Verfahren der eingangs genannten Art ist aus dem Dokument DE-A-0588193 bekannt.

Der Erfindung liegt die Aufgabe zugrunde, ein Verfahren der eingangs genannten Art einfacher durchführbar zu gestalten.

Diese Aufgabe wird durch die in den Patentansprüchen 1 und 2 angegebene Erfindung gelöst. Vorteilhafte Ausgestaltungen und Fortbildungen sind in den Unteransprüchen angegeben.

Eine erfindungsgemäße Maßnahme ist, anstelle der Bremskraft die bei einem sich bewegenden Fahrzeug aus der Bremskraft resultierende Fahrzeugverzögerung zu erfassen.

Der Ansprechdruck einer Bremse kann sich im Einsatz verändern. Eine nennenswerte Veränderung des Ansprechdrucks kann ein Hinweis auf einen Defekt sein. Mittels des Ansprechdrucks kann deshalb der Zustand einer Bremse bzw. ihrer Bauelemente bzw. ihrer Systemkomponenten überwacht werden. Die Erfindung erleichtert eine solche Überwachung erheblich, da die dazu erforderlichen Einrichtungen in dem Fahrzeug angeordnet werden können und/oder bereits vorhanden sind. Weist das Fahrzeug eine Einrichtung zur Druckerfassung und eine Einrichtung zur Gewinnung und/oder Verarbeitung fahrzeugwegabhängiger und/oder fahrzeuggeschwindigkeitsabhängiger Signale, z. B. in einer Blockierschutzanlage, auf, so ist die Erfindung ohne jede zusätzliche Einrichtung durchführbar. Die Überwachung kann routinemäßig, beispielsweise bei jeder Betätigung oder bei ausgewählten Betätigungen des Fahrzeugbremssystems, vorgenommen werden.

Weist ein Fahrzeugbremssystem, wie es der Normalfall ist, mehrere Bremsen auf, so können unterschiedliche Ansprechdrücke derselben zu einer unerwünscht hohen Belastung der früher ansprechenden Bremse(n) und damit zu einem ungleichmäßigen Verschleiß der Verschleißteile der Bremsen, insbesondere also der Bremsbeläge und der Bremstrommeln bzw. Bremsscheiben, führen.

Zur Beseitigung dieses Risikos kann die Erfindung so fortgebildet werden, daß sie die Druckverteilung zwischen den verschiedenen Bremsen nach Maßgabe des ermittelten Ansprechdrucks oder nach Maßgabe des Verhältnisses der Ansprechdrücke der Bremsen untereinander verändert. Dadurch wird beispielsweise der später ansprechenden Bremse mit dem höheren Ansprechdruck von vornherein ein Druck zugeführt, der gegenüber dem bzw. den der anderen Bremse(n) zugeführten Druck um soviel höher ist, daß alle Bremsen gleichzeitig ansprechen, d. h. gleichzeitig mit der Bremskrafterzeugung beginnen. Diese Möglichkeit ist von besonderer Bedeutung für Fahrzeugzüge, in denen bekanntlich ein Motorwagen mit unterschiedlichen Anhängern gekuppelt wird, deren Bremsen unterschiedliche Ansprechdrücke haben können.

Weitere Vorteile der Erfindung werden in deren nunmehr folgender Erläuterung anhand zeichnerischer Darstellungen genannt.

Es zeigen:

2

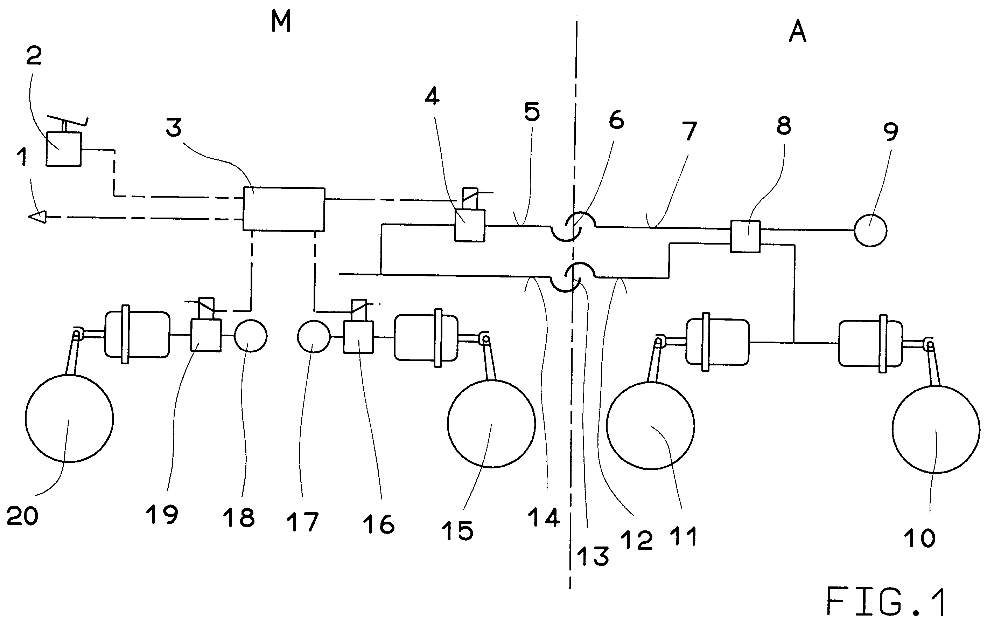

Fig. 1    schematisch ein Fahrzeugbremssystem eines Fahrzeugzuges,

Fig. 2 )

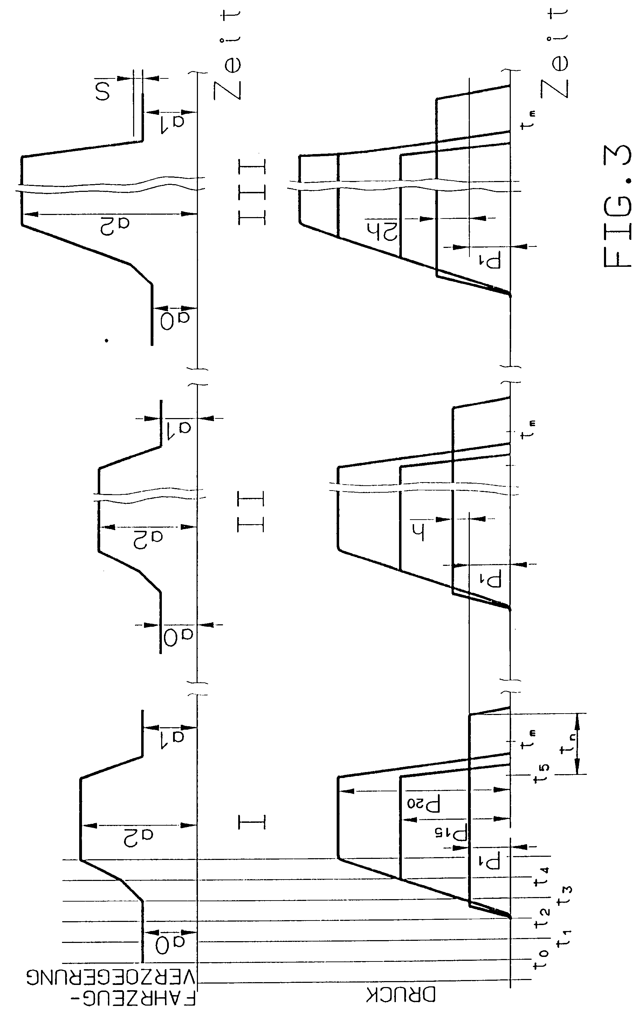

Fig. 3 )    Verläufe von Test-Bremsungen.

Das in Fig. 1 schematisch dargestellte Fahrzeugbremssystem eines Fahrzeugzuges besteht aus einer generell mit (M) bezeichneten Motorwagenbremsanlage und einer generell mit (A) bezeichneten Anhängerbremsanlage, die in bekannter Weise über eine Vorratsleitung (12, 14) mit einem Vorratskupplungskopf (13) und eine Anhängerbremsleitung (5, 7) mit einem Bremskupplungskopf (6) untereinander verbunden sind.

Die Anhängerbremsanlage (A) weist an jeder Seite jeder Anhängerachse durch Druck betätigte Anhängerbremsen auf, von denen diejenigen einer Seite einschließlich der zugeordneten Bremszylinder und mechanischen Übertragungsteile mit den Bezugszeichen (10) und (11) angedeutet sind.

Als Steuereinrichtung weist die Anhängerbremsanlage (A) ein Anhängerbremsventil (8) auf. Das von der Motorwagenbremsanlage (M) über die Vorratsleitung (12, 14) auf den Anhänger übertragene Druckmittel wird über das Anhängerbremsventil (8) einem Anhängervorrat (9) zugeführt. Der von der Motorwagenbremsanlage (M) über die Anhängerbremsleitung (5, 7) abgegebene Anhängerbremsdruck wird dem Anhängerbremsventil (8) zugeführt. Dieses verbindet bei Erhalt eines Anhängerbremsdrucks den Anhängervorrat (9) mit den Anhängerbremsen (10, 11) und läßt zu diesen aus dem Anhängervorrat (9) einen Druck durch, dessen Höhe von der Höhe des Anhängerbremsdrucks bestimmt ist.

Die Anhängerbremsanlage (A) entspricht somit einer üblichen Zweileitungs-Anhängerbremsanlage.

Die Motorwagenbremsanlage (M) weist an jeder Seite jeder Motorwagenachse durch Druck betätigte Motorwagenbremsen auf, von denen diejenigen einer Seite einschließlich der zugeordneten Bremszylinder und mechanischen Übertragungsteile mit den Bezugszeichen (15) und (20) angedeutet sind. Jeder Motorwagenbremse (15, 20) ist ein Motorwagenvorrat (17 bzw. 18) zugeordnet.

Die Motorwagenvorräte (17, 18) werden in üblicher Weise über getrennte und geneinander abgesicherte Leitungen von einer nicht dargestellten Druckmittelbeschaffungsanlage auf dem Motorwagen mit Druckmittel versorgt. Die Motorwagenbremsanlage (M) ist somit in üblicher Weise zweikreisig. Auch die Anhängervorratsleitung (12, 14) und damit der Anhängervorrat (9) werden in üblicher Weise über getrennte und abgesicherte Leitungen von der Druckluftbeschaffungsanlage versorgt.

Als vom Fahrzeugführer zu betätigendes Bedienungsorgan für das Fahrzeugbremssystem ist auf dem Motorwagen eine elektrische Steuereinrichtung vorgesehen. Diese besteht aus einem Bremswertgeber (2), einer Steuerelektronik (3), je einem elektrisch gesteuerten Druckmodulator (16 bzw. 19) für jede Motorwagenbremse (15 bzw. 20) und einem elektrisch gesteuerten Anhängersteuerventil (4).

Die Druckmodulatoren (16, 19) sind druckseitig jeweils zwischen einem Motorwagenvorrat (17 bzw. 18) und der zugeordneten Motorwagenbremse (15 bzw. 20) angeordnet. Das Anhängersteuerventil (4) ist druckseitig einerseits an die Anhängervorratsleitung (12, 14) und andererseits an die Anhängerbremsleitung (5, 7) angeschlossen.

Zwecks Betätigung des Fahrzeugbremssystems leitet der Fahrzeugführer über ein Betätigungsglied des Bremswertgebers (2), z. B. ein Pedal, ein Betätigungssignal in den Bremswertgeber (2) ein. Das Betätigungssignal kann eine Betätigungskraft auf das Betätigungsglied und/oder ein Betätigungsweg des Betätigungsgliedes sein. Der Bremswertgeber (2) gibt bei Erhalt des Betätigungssignals ein entsprechendes Sollwertsignal an die Steuerelektronik (3) ab. Diese bereitet das Sollwertsignal zu Druckanforderungssignalen für die Druckmodulatoren (16, 19) und für das Anhängersteuerventil (4) auf.

Jeder Druckmodulator (16, 19) verbindet bei Erhalt eines Druckanforderungssignals den zugeordneten Motorwagenvorrat (17 bzw. 18) mit der zugeordneten Bremse (15 bzw. 20) und hält diese Verbindung aufrecht, bis sich in der jeweiligen Bremse (15 bzw. 20) ein der Größe des Druckanforderungssignals entsprechender Druck aufgebaut hat. Das Anhängersteuerventil (4) verbindet bei Erhalt eines Druckanforderungssignals die Anhängervorratsleitung (12, 14) mit der Anhängerbremsleitung (5, 7), bis sich in letzterer ein von der Größe des Druckanforderungssignals abhängiger Anhängerbremsdruck aufgebaut hat. Die den Druckmodulatoren (16, 19) und dem Anhängersteuerventil (4) zugeführten Druckanforderungssignale sind also repräsentativ für die von diesen Geräten durchzulassenden Drücke.

Beendet oder reduziert der Fahrzeugführer die Betätigung des Fahrzeugbremssystems durch Aufhebung bzw. Reduzierung des Betätigungssignals in den Bremswertgeber (2), löscht bzw. reduziert die Steuerelektronik (3) die Druckanforderungssignale mit dem Ergebnis, daß die Druckmodulatoren (16, 19) und das Anhängersteuerventil (4) die zuvor durchgelassenen Drücke abfallen lassen.

Bei der Aufbereitung des Sollwertsignals zu den Druckanforderungssignalen kann die Steuerelektronik (3) in üblicher Weise weitere zugeführte Informationen, beispielsweise den Beladungszustand von Motorwagen und/oder Anhänger, die Auslastung der Motorwagenachsen, die Kraft in der Verbindung zwischen Motorwagen und Anhänger, berücksichtigen. Deshalb können die einzelnen Druckanforderungssignale und die zugeordneten Drücke unterschiedlich sein.

Im bisher beschriebenen Umfang ist das Fahrzeugbremssystem ein übliches elektrisch gesteuertes Fahrzeugbremssystem.

Dieses Fahrzeugbremssystem ermöglicht auf einfache Weise die Ermittlung der Ansprechdrücke der Bremsen. Dabei ist unter "Bremse" die vollständige Motorwagenbremsanlage (M) für sich, die vollständige Anhängerbremsanlage (A) für sich oder jeweils ein Bremskreis der Motorwagenbremsanlage (M), bestehend aus Motorwagenvorrat (17 bzw. 18), Druckmodulator (16 bzw. 19) und Motorwagenbremse (15 bzw. 20) zu verstehen. Als einzige zusätzliche Einrichtung ist zu diesem Zweck ein Verzögerungssensor, wie er mit dem Bezugszeichen (1) angedeutet ist, erforderlich. Dieser, mit der Steuerelektronik (3) zu verbindende, Verzögerungssensor gibt an die Steuerelektronik (3) ein Verzögerungssignal ab, welches für die jeweils vorhandene Fahrzeugzugverzögerung repräsentativ ist.

Werden aber in der Fahrzeugbremsanlage oder in dem Fahrzeugzug aus anderen Gründen schon fahrzeugwegabhängige und/oder fahrzeuggeschwindigkeitsabhängige Signale erzeugt und/oder verarbeitet, so bedarf es eines zusätzlichen Verzögerungssensors nicht. Ein solcher Fall ist beispielsweise gegeben, wenn die Fahrzeugbremsanlage eine Blockierschutzeinrichtung (ABS) aufweist, die der Fahrzeugzugverzögerung entsprechende Radverzögerungssignale zur Verfügung stellt. Ein anderer solcher Fall ist beispielsweise gegeben, wenn im Fahrzeugzug ein Tachosignal gewonnen wird, aus dem die Steuerelektronik (3) die Fahrzeugzugverzögerung errechnen kann.

Zunächst sei die Ermittlung des Ansprechdrucks (pa) der Anhängerbremsanlage (A) als Bremse beschrieben.

In einer ersten Alternative erfolgt die Ermittlung in reinen Test-Bremsungen, in denen der Fahrzeugführer das Fahrzeugbremssystem nicht betätigt. Zu diesem Zweck sind in der Steuerelektronik Merkmale programmiert, anhand derer diese geeignete Zeitpunkte für die Durchführung von Test-Bremsungen erkennen kann. Außerdem ist zu diesem Zweck die Steuerelektronik (3) so programmiert, daß sie bei Änderungen dieser Merkmale vor einem weiter unten näher erläuterten Meßzeitpunkt (tm) die Test-Bremsung abbricht. Die Steuerelektronik (3) kann des weiteren so programmiert sein, daß sie nicht bei jedem Vorliegen dieser Merkmale, sondern nur bei ausgewählten Gelegenheiten, beispielsweise bei jedem x-ten oder durch einen Zufallsgenerator bestimmten Mal, auf eine Test-Bremsung erkennt. Beispielsweise können solche Merkmale vorliegen, wenn der Fahrzeugführer das Fahrpedal (Gaspedal) losläßt, aber nicht den Bremswertgeber (2) betätigt.

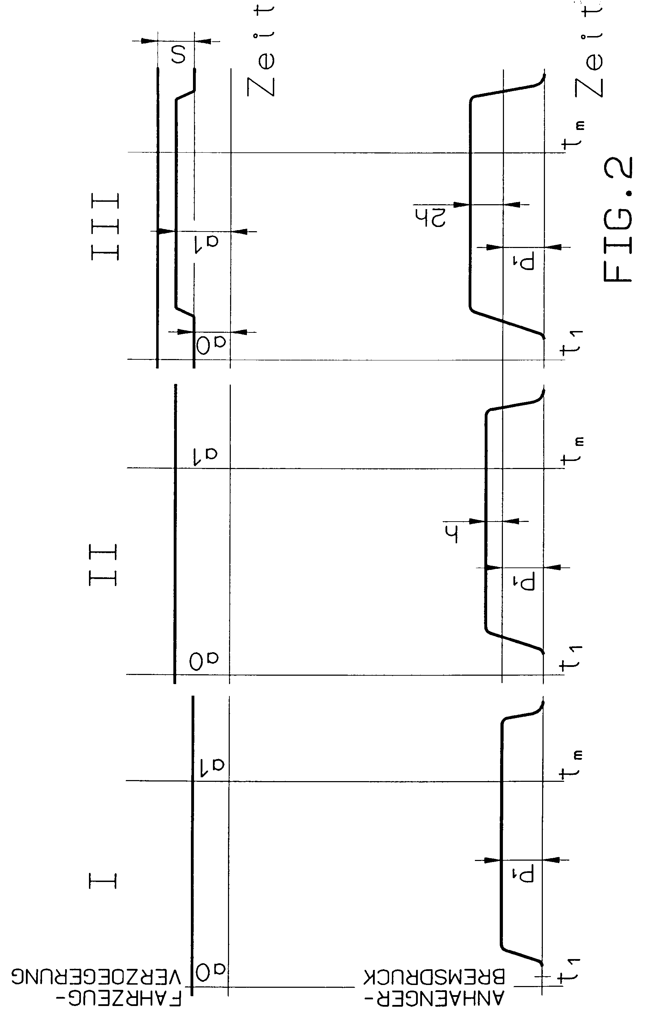

Fig. 2 zeigt für diese Alternative in Abhängigkeit von der Zeit in der unteren Bildhälfte die idealisierten Verläufe des Anhängerbremsdrucks und in der oberen Bildhälfte die idealisierten Verläufe der Fahrzeugzugverzögerung in drei Testbremsungen I, II und III.

Nach dem Erkennen auf eine Test-Bremsung erfaßt die Steuerelektronik (3) zu einem Zeitpunkt (t1) die vorhandene Fahrzeugzugverzögerung als Grund-Fahrzeugverzögerung (a0).

Eine Grund-Fahrzeugverzögerung (a0) kann verschiedene Ursachen haben. Sie kann beispielsweise auf Fahrwiderstände, Fahrbahnbedingungen (Steigung, Gefälle), eine Motorbremswirkung, eine Retarderbremswirkung zurückzuführen sein.

Nach dem Erfassen der Grund-Fahrzeugverzögerung (a0) gibt die Steuerelektronik (3) an das Anhängersteuerventil (4) ein Druckanforderungssignal ab, welches einen geringen Test-Anhängerbremsdruck (p1), beispielsweise von 0,5 bar, fordert. Wegen der bereits erwähnten Abhängigkeit des Anhängerbremsdrucks von dem Druckanforderungssignal könnte letzteres ebenfalls mit (p1) bezeichnet werden.

Allerdings eilt der tatsächliche Aufbau des Anhängerbremsdrucks dem Druckanforderungssignal nach. Dies drückt sich in Fig. 2 darin aus, daß der Anhängerbremsdruck nicht auf den Wert des Test-Anhängerbremsdrucks (p1) springt, sondern diesen mit einer Zeitfunktion erreicht.

Sodann erfaßt die Steuerelektronik (3) zu einem vorbestimmten Meßzeitpunkt (tm) die nach der Zuführung des Test-Anhängerbremsdrucks (p1) und der entsprechenden Druckzuführung zu den Anhängerbremsen (10, 11) vorhandene Fahrzeugzugverzögerung als Test-Fahrzeugverzögerung (a1). Die Zeitpunkte (t1) und (tm) sind mittels des Zeitgebers der Steuerelektronik (3) in letzterer programmiert. Dabei ist der Meßzeitpunkt (tm) so vorbestimmt, daß nach der Erfahrung in diesem Zeitpunkt der Druckaufbau in den Anhängerbremsen (10, 11) mit Sicherheit zum Abschluß gekommen ist.

Hat der Test-Anhängerbremsdruck (p1) den Ansprechdruck (pa) der Anhängerbremsanlage (A) überschritten, so äußert sich dies dadurch, daß die Test-Fahrzeugverzögerung (a1) größer als die Grund-Fahrzeugverzögerung (a0) ist. Hat der Test-Anhängerbremsdruck (p1) den Wert des Ansprechdrucks (pa) nicht erreicht oder gerade erreicht, so ist die Test-Fahrzeugverzögerung (a1) nicht größer als die Grund-Fahrzeugverzögerung (a0).

Um dies zu überprüfen, vergleicht die Steuerelektronik (3) die im Zeitpunkt (t1) erfaßte Grund-Fahrzeugverzögerung (a0) und die im Meßzeitpunkt (tm) erfaßte Test-Fahrzeugverzögerung (a1).

Dieser Vergleich ergibt, wie die Darstellung erkennen läßt, bei der Test-Bremsung I Gleichheit zwischen (a1) und (a0). Dieses Ergebnis läßt nur die Aussage zu, daß der Test-Anhängerbremsdruck (p1) den Ansprechdruck (pa) nicht überschritten hat. Eine Aussage, ob der Test-Anhängerbremsdruck (p1) noch unterhalb des gesuchten Ansprechdrucks liegt oder diesen gerade erreicht hat, läßt dieses Ergebnis nicht zu. Deshalb ist, wie weiter unten näher ausgeführt wird, die Steuerelektronik (3) so programmiert, daß sie auf das Erreichen des gesuchten Ansprechdrucks (pa) erkennt, wenn der Test-Anhängerbremsdruck im Rahmen eines vorbestimmten Toleranzwertes (s) den wahren Ansprechdruck überschritten hat.

Nach dem Meßzeitpunkt (tm) löscht die Steuerelektronik (3) das Druckanforderungssignal, so daß sich der Test-Anhängerbremsdruck (p1) und damit die entsprechenden Drücke in den Anhängerbremsen (10, 11) abbauen können.

Wenn jetzt die Merkmale der Test-Bremsung noch vorliegen oder wenn diese später erneut vorliegen, erkennt die Steuerelektronik (3) auf eine zweite Test-Bremsung II, in der sie die in der Test-Bremsung I durchgeführten Schritte wiederholt, dabei aber den Test-Anhängerbremsdruck um einen vorbestimmten Schritt (h) erhöht. (h) kann beispielsweise 0,2·p1 betragen. Mit dem für die Test-Bremsung I beispielhaft angenommenen Zahlenwert für p1 von 0,5 bar ist (h) also 0,1 bar und der Test-Anhängerbremsdruck in Test-Bremsung II 0,6 bar.

Wie die Darstellung erkennen läßt, ist in Test-Bremsung II die Grund-Fahrzeugverzögerung (a0) größer als in Test-Bremsung I. Dies ist auf andere Ausgangsbedingungen zurückzuführen, z. B. eine größere Fahrbahnsteigung, und spielt vorliegend keine Rolle, weil es für die Ermittlung des Ansprechdrucks (pa) auf die absolute Höhe der erfaßten Fahrzeugverzögerungen nicht ankommt. Wie die Darstellung zeigt, hat auch in Test-Bremsung II der erhöhte Test-Anhängerbremsdruck von 1,2·p1 nicht zu einer Erhöhung der Fahrzeugzugverzögerung geführt, also den gesuchten Ansprechdruck (pa) nicht oder gerade erreicht.

Nunmehr wiederholt die Steuerelektronik (3) in einer dritten Testbremsung III die früheren Schritte mit einem um 2h erhöhten Test-Anhängerbremsdruck, der nun den Wert 1,4·p1 hat. Die Darstellung zeigt, daß bei dieser Testbremsung die Grund-Fahrzeugzugverzögerung (a0) wieder anders als bei den früheren Test-Bremsungen ist. Außerdem zeigt die Darstellung, daß nunmehr die Test-Fahrzeugverzögerung (a1) die Grund-Fahrzeugverzögerung (a0) überwiegt, die Steuerelektronik (3) folglich feststellt a1>a0. In Test-Bremsung III hat der Test-Anhängerbremsdruck von 1,4·p1 also den gesuchten Ansprechdruck (pa) überschritten.

Nunmehr muß die Steuerelektronik (3) prüfen, ob sie den Test-Anhängerbremsdruck von 1,4·p1 der Test-Bremsung III als den gesuchten Ansprechdruck (pa) erkennen darf. Zu diesem Zweck vergleicht die Steuerelektronik (3) die Differenz (a1-a0) mit dem ihr einprogrammierten Toleranzwert (s). Laut Darstellung ist (a1-a0)<s. Die Steuerelektronik (3) darf also den bei der Test-Bremsung III angewandten Test-Anhängerbremsdruck als Ansprechdruck (pa) der Anhängerbremsanlage (A) erkennen. Dies würde auch im Falle (a1-a0)=s gelten.

Nun sei angenommen, die Steuerelektronik (3) habe bei der Test-Bremsung III festgestellt, daß die Differenz (a1-a0) den Toleranzwert (s) übersteigt, also (a1-a0)>s. Für diesen Fall ist die Steuerelektronik (3) so programmiert, daß sie bei einer oder mehreren weiteren Test-Bremsungen die beschriebenen Schritte wiederholt, dabei aber den letzten Test-Anhängerbremsdruck von 1,4·p1 in Schritten wieder mindert, bis die Differenz (a1-a0) zwischen 0 und einschließlich s liegt, also bis sie 0<(a1-a0)≤s feststellt. Damit in diesem Fall andere Test-Anhängerbremsdrücke als vorher möglich sind, ist es ratsam, bei der Minderung eine andere Schrittweite als vorher vorzusehen, beispielsweise von 0,1·p1.

Nun sei angenommen, die Steuerelektronik (3) habe schon bei der Test-Bremsung I eine den Toleranzwert (s) übersteigende Differenz (a1-a0), also (a1-a0)>s, festgestellt. Für diesen Fall ist die Steuerelektronik (3) so programmiert, daß sie bei der zweiten, dritten usw. Test-Bremsung den Test-Anhängerbremsdruck, wie vorstehend beschrieben, schrittweise mindert, bis sie 0<(a1-a0)≤s feststellt. Allerdings könnten in diesem Fall die Schritte wieder, beispielsweise, 0,2·p1 betragen. Würde die Steuerelektronik (3) in diesem Fall bei der Durchführung der Test-Bremsungen mit gemindertem Test-Anhängerbremsdruck eine Gleichheit zwischen (a1) und (a0), also (a1-a0)=0, feststellen, würde sie die im Zusammenhang mit den Test-Bremsungen I-III beschriebenen Schritte wiederholen.

Es liegt auf der Hand, daß durch geeignete Festlegung des Toleranzwertes (s) und der Größe der Steigerungs- bzw. Minderungsschritte der ermittelte Wert des Ansprechdrucks (pa) mit praktisch beliebiger Genauigkeit an den wahren Ansprechdruck angenähert werden kann.

In nicht dargestellter Weise kann die Steuerelektronik (3) auch so ausgebildet werden, daß sie die Grund-Fahrzeugverzögerung (a0) nicht zu dem vor dem Meßzeitpunkt (tm) liegenden Zeitpunkt (t1), sondern zu einem nach dem Meßzeitpunkt (tm) liegenden Zeitpunkt erfaßt, in dem das Druckanforderungssignal gelöscht und der Test-Anhängerbremsdruck sowie die entsprechenden Drücke der Anhängerbremsen (10, 11) vollständig abgefallen sind.

Es sei noch darauf hingewiesen, daß der Fahrzeugführer die Test-Bremsungen überhaupt nicht wahrnimmt, sofern der Test-Anhängerbremsdruck den gesuchten Ansprechdruck (pa) nicht übersteigt. Übersteigt der Test-Anhängerbremsdruck den gesuchten Ansprechdruck (pa), kann der Fahrzeugführer die betreffende Test-Bremsung wahrnehmen. Da die in diesem Fall auftretende Differenz (a1-a0) jedoch sehr gering ist, wird der Fahrzeugführer aber auch in diesem Fall die Test-Bremsung praktisch kaum wahrnehmen, dies um so weniger, als diese Wahrnehmung ja vor dem Hintergrund der üblichen betrieblichen Ungleichförmigkeiten der Fahrzeuggeschwindigkeit erfolgen müßte.

In einer zweiten Alternative, die anhand der Fig. 3 mit idealisierten Verläufen der Drücke und der Fahrzeugzugverzögerung erläutert wird, sind die Test-Bremsungen I, II, III in von dem Fahrzeugführer ausgelöste Wirkbremsungen integriert. Da, wie aus dem folgenden hervorgeht, die Anhängerbremsanlage (A) bei diesen Wirkbremsungen keine oder nur eine sehr geringe Bremswirkung erzeugt, ist es zweckmäßig, die Steuerelektronik (3) so zu programmieren, daß sie auf Test-Bremsungen nur erkennt, wenn der Fahrzeugführer das Fahrzeugbremssystem im unteren Teilbremsbereich, d. h. mit einem geringen Betätigungssignal und entsprechend geringem Druckniveau betätigt.

In dieser Alternative können in allgemeiner Form der Test-Anhängerbremsdruck als erster Druck und der in der Motorwagenbremsanlage wirkende Druck als zweiter Druck bezeichnet werden. Auch wenn, wie im folgenden, in den Bremskreisen der Motorwagenbremsanlage unterschiedliche Drücke wirken, können diese bei der Ermittlung des Ansprechdrucks (pa) der Anhängerbremsanlage (A) zusammenfassend als ein zweiter Druck angesehen werden, weil die Zahl der Drücke in der Motorwagenbremsanlage hinsichtlich des Ermittlungsergebnisses unbeachtlich ist.

Der Zeitpunkt (t1) für die Erfassung der Grund-Fahrzeugverzögerung (a0) soll in dieser Alternative zunächst innerhalb der Ansprechzeit des Bremswertgebers (2) liegen. "Ansprechzeit" des Bremswertgebers (2) ist der Zeitverzug, der, bedingt durch den Leerweg des Bremswertgebers (2), zwischen dem ersten Einwirken des Fahrzeugführers auf den Bremswertgeber (2) in einem Zeitpunkt (t0) und der ersten Abgabe eines Sollwertsignals in einem Zeitpunkt (t2) durch den Bremswertgeber (2) auftritt. Innerhalb dieser Ansprechzeit wird dem Bremswertgeber (2) üblicherweise zu einem Zeitpunkt (t1) ein Bremslicht-Schaltsignal entnommen, welches auch als Auslösesignal für die Erfassung der Grund-Fahrzeugverzögerung (a0) herangezogen werden kann.

Die Steuerelektronik (3) ist so programmiert, daß sie nach Ablauf der Ansprechzeit im Zeitpunkt (t2) an das Anhängersteuerventil (4) das dem Test-Anhängerbremsdruck entsprechende Druckanforderungssignal abgibt, welches von dem durch den Fahrzeugführer in dem Bremswertgeber (2) eingeleiteten Betätigungssignal unabhängig ist. Gleichzeitig gibt die Steuerelektronik (3) an die Druckmodulatoren (16, 19) der Motorwagenbremsanlage (M) Druckanforderungssignale ab. Diese Druckanforderungssignale sind von dem Betätigungssignal, welches der Fahrzeugführer in dem Bremswertgeber (2) eingeleitet hat, abhängig, und diesen Druckanforderungssignalen entsprechen Drücke (p15, p20) in den Motorwagenbremsen (15, 20).

Im Zeitpunkt (t2) beginnt der Aufbau des Test-Anhängerbremsdrucks (p1) und der Drücke (p15, p20). In einem Zeitpunkt (t3) hat der Druck (p15) den Wert des Ansprechdrucks des zugeordneten Bremskreises (17, 16, 15) der Motorwagenbremsanlage (M) erreicht. In diesem Zeitpunkt steigt die Fahrzeugzugverzögerung, ausgehend von der Grund-Fahrzeugverzögerung (a0) an. In einem Zeitpunkt (t4) hat der Druck (p20) den Wert des Ansprechdrucks des Bremskreises (18, 19, 20) der Motorwagenbremsanlage (M) erreicht. In diesem Zeitpunkt nimmt die Aufbaugeschwindigkeit der Fahrzeugzugverzögerung zu. Nach dem vollständigen Aufbau der Drücke (p15, p20) in den Motorbremsen (15, 20) und des Test-Anhängerbremsdrucks (p1) sowie der entsprechenden Drücke in den Anhängerbremsen (10, 11) wird der Fahrzeugzug mit einer Wirkverzögerung (a2) gebremst.

Die Steuerelektronik (3) kann aber auch so programmiert sein, daß sie das Druckanforderungssignal an das Anhängersteuerventil (7) bereits im Zeitpunkt (t1) oder zwischen (t1) und (t2) abgibt. In diesem Fall beginnt, anders als dargestellt, der Aufbau des Test-Anhängerbremsdrucks (p1) schon in diesem Zeitpunkt.

Die Drücke (p15, p20) in den Motorwagenbremsen (15, 20) sind unterschiedlich hoch dargestellt. Dem liegt die Annahme zugrunde, daß die Steuerelektronik (3) bei der Aufbereitung der Druckanforderungssignale für die Druckmodulatoren (16, 19) unterschiedliche Informationen verarbeitet. Wenn die Steuerelektronik (3) hierzu nicht ausgebildet oder die Informationen entsprechend sind, können die Drücke (p15, p20) auch gleich sein. Der Darstellung liegt auch die Annahme zugrunde, daß die Bremskreise der Motorwagenbremsanlage (M) unterschiedliche Ansprechdrücke aufweisen. Diese können aber auch gleich sein bzw. so geringfügig voneinander unterschiedlich sein, daß sie gleich angenommen werden können.

Im Zeitpunkt (t5) beendet der Fahrzeugführer die Betätigung des Fahrzeugbremssystems durch Aufhebung des Bremsbetätigungssignals in den Bremswertgeber (2) mit dem Ergebnis, daß die Druckanforderungssignale zu den Druckmodulatoren (16, 19) erlöschen und die Drücke (p15, p20) abzufallen beginnen. Das Druckanforderungssignal zu dem Anhängersteuerventil (4) hält die Steuerelektronik (3) nach dem Zeitpunkt (t5) aber noch für eine vorbestimmte Nachlaufzeit (tn) aufrecht. Die Dauer der Nachlaufzeit (tn) ist so bemessen, daß in ihr nach der Erfahrung der vollständige Abfall der Drücke (p15, p20) erfolgt und anschließend der Meßzeitpunkt (tm) liegt.

Mit den Drücken (p15, p20) fällt auch die von diesem verursachte Wirkfahrzeugverzögerung (a2) ab. Nach dem vollen Abfall der Drücke (p15, p20) ist die Fahrzeugzugverzögerung auf den Wert der Test-Fahrzeugverzögerung (a1) abgefallen, den die Steuerelektronik (3) im Meßzeitpunkt (tm) erfaßt.

Anschließend an die Erfassung der Test-Fahrzeugverzögerung (a1) verfährt die Steuerelektronik (3) zur Ermittlung des Ansprechdrucks (pa) der Anhängerbremsanlage (A) wie weiter oben im Zusammenhang mit der ersten Alternative beschrieben.

Aus Fig. 3 geht hervor, daß bei der Test-Bremsung I die Test-Fahrzeugverzögerung (a1) die Grund-Fahrzeugverzögerung (a0) nicht überschreitet, also unklar ist, ob der Test-Anhängerbremsdruck den gesuchten Wert des Ansprechdrucks (pa) erreicht hat. Bei der Testbremsung II ist der Test-Anhängerbremsdruck um den Schritt (h) erhöht, die Test-Fahrzeugverzögerung (a1) aber trotzdem nicht größer als die Grund-Fahrzeugverzögerung (a0); die Unklarheit über das Erreichen des gesuchten Ansprechdrucks (pa) besteht also noch immer. Erst bei der Test-Bremsung III, in der der Test-Anhängerbremsdruck um (2h) erhöht ist, ist die Test-Fahrzeugverzögerung (a1) größer als die Grund-Fahrzeugverzögerung (a0), der gesuchte Ansprechdruck (pa) also mit Sicherheit erreicht und überschritten. Der Darstellung läßt sich ferner entnehmen, daß bei der Test-Bremsung III die Differenz zwischen der Test-Fahrzeugverzögerung (a1) und der Grund-Fahrzeugverzögerung (a0) kleiner als der Toleranzwert (s) ist, also (a1-a0)<s , mithin die Steuerelektronik (3) den in dieser Test-Bremsung angewandten Test-Anhängerbremsdruck in Höhe von 1,4 · p1 als den gesuchten Ansprechdruck (pa) erkennen kann.

In der soeben beschriebenen zweiten Alternative kann die Grund-Fahrzeugverzögerung (a0) in nicht dargestellter Weise statt im Zeitpunkt (t1) zu Beginn einer Wirkbremsung auch nach Ablauf der Nachlaufzeit (tn), also am Schluß der Test-Bremsung, vorgenommen werden.

In beiden beschriebenen Alternativen kann die Steuerelektronik (3) auch so programmiert sein, daß sie die Fahrzeugzugverzögerung ständig erfaßt und die in den Zeitpunkten (t1, tm) und gegebenenfalls später vorhandenen Momentanwerte als Grund- bzw. Test-Fahrzeugverzögerung (a0 bzw. a1) auswertet.

Das vorstehend über die Ermittlung des Ansprechdrucks der Anhängerbremsanlage (A) Ausgeführte läßt sich auf die Ermittlung des Ansprechdrucks der Motorwagenbremsanlage (M) und eines ihrer Bremskreise übertragen.

Beispielsweise sei angenommen, der Ansprechdruck des Bremskreises (18, 19, 20) solle ermittelt werden. Dann muß die Steuerelektronik (3) mit dem Druckanforderungssignal zu dem diesem Bremskreis zugeordneten Druckmodulator (19) und dem zugeordneten Druck (p20) wie vorstehend mit dem Druckanforderungssignal zu dem Anhängersteuerventil (4) und dem Test-Anhängerbremsdruck (p1) verfahren. In der Alternative mit Integration der Test-Bremsung in eine Wirkbremsung sind in diesem Beispiel der Druck (p20) der erste Druck und der Druck (p15) der zweite Druck.

Es liegt auf der Hand, daß sich die Ermittlung des Ansprechdrucks der Motorwagenbremsanlage (M) und ihrer Bremskreise wie beschrieben auch ohne das Vorhandensein eines Anhängers bzw. einer Anhängerbremsanlage durchführen läßt.

In die bisher abgehandelten Ansprechdrücke gehen alle hinter dem jeweiligen Druckanforderungssignal auftretenden Ansprechwiderstände ein. Dies sind im Falle der Anhängerbremsanlage (A) die Ansprechwiderstände des Anhängersteuerventils (4), des Anhängerbremsventils (8) sowie der Anhängerbremsen (10, 11) und im Falle z. B. des Bremskreises (18, 19, 20) der Motorwagenbremsanlage (M) die Ansprechwiderstände des Druckmodulators (19) und der Motorwagenbremse (20). Sind, wie üblich und nicht dargestellt, weitere Einrichtungen in den genannten Bremsanlagen vorgesehen, z. B. automatischer Bremskraftregler (ALB), Relaisventile, Druckbegrenzungsventile usw., gehen auch deren Ansprechwiderstände in die ermittelten Ansprechdrücke ein.

Es ist aber möglich, bei der Ermittlung eines Ansprechdruckes die Ansprechwiderstände bestimmter oder aller den Motorwagenbremsen und den Anhängerbremsen zugehörigen Systemkomponenten auszuschalten. Zu diesem Zweck muß stromabwärts der auszuschaltenden Systemkomponenten ein elektrischer Drucksensor angeordnet und elektrisch mit der Steuerelektronik (3) verbunden werden. Häufig ist dieser Aufwand aber nicht erforderlich, weil ein bzw. mehrere solche Drucksensoren aus anderen Gründen vorhanden sind, beispielsweise bedingt durch die vorhandene Druckmodulator-Bauart. Die Steuerelektronik (3) muß zum gleichen Zweck so programmiert werden, daß sie die Druckanforderungssignale zu dem Anhängersteuerventil (4) bzw. den Druckmodulatoren (16, 19) bzw. dem jeweiligen Druckmodulator (16) bzw. (19) so bemißt, daß die den bisher erwähnten Test-Anhängerbremsdrücken entsprechenden Drücke an dem Drucksensor auftreten und von diesem gemessen werden. Beispielsweise sei angenommen, der Ansprechdruck der Motorwagenbremse (20) solle ermittelt werden. Dann muß der vorstehend erwähnte Drucksensor an dem zugehörigen Bremszylinder oder an einem diesem unmittelbar Druck zuführenden Bauteil (z. B. Druckleitung, Ausgang des Druckmodulators) angeordnet sein. Die Steuerelektronik (3) stellt dann in den Test-Bremsungen gemäß den oben beschriebenen Alternativen das Druckanforderungssignal zu dem Druckmodulator (19) so ein, daß der erwähnte Drucksensor gerade den Test-Druck mißt und der Steuerelektronik (3) meldet.

Ein ermittelter Ansprechdruck kann auf vielfältige Weise ausgewertet werden. Beispielsweise kann die Steuerelektronik (3) den Ansprechdruck mittels einer nicht dargestellten Anzeigeeinrichtung darstellen. Anhand der Anzeige kann dann der Fahrzeugführer die Motorwagenbremsanlage (M) bzw. ihre Bremskreise bzw. die Motorwagenbremsen und/oder die Anhängerbremsanlage (A) bzw. die Anhängerbremsen auf Veränderungen der Ansprechdrücke überwachen, die auf einen Defekt schließen lassen.

Bei einer anderen Möglichkeit der Auswertung der ermittelten Ansprechdrücke kann die Steuerelektronik (3) so programmiert sein, daß sie ein oder mehrere Druckanforderungssignal(e) nach Maßgabe der Ansprechdrücke verändert. Es sei beispielsweise für beide Bremskreise (17, 16, 15) und (18, 19, 20) der Motorwagenbremsanlage (M) ein gleicher Ansprechdruck von 0,5 bar wie vorstehend ermittelt oder aus anderen Quellen bekannt. Dann hat auch die Motorwagenbremsanlage (M) für sich einen Ansprechdruck von 0,5 bar. Für die Anhängerbremsanlage (A) ermittle die Steuerelektronik (3) einen Ansprechdruck (pa) von 0,8 bar. Die Anhängerbremsanlage (A) würde in diesem Falle erst zu bremsen beginnen, wenn die Motorwagenbremsanlage bereits mit einem Wirkdruck von 0,8-0,5=0,3 bar bremst. Entsprechend würde beispielsweise die Motorwagenbremsanlage (M) bereits mit einem Wirkdruck von 1,3 bremsen, wenn die Anhängerbremsanlage (A) erst mit einem Wirkdruck von 1,0 bar bremst. Daraus kann in einem längeren Einsatzzeitraum ein ungleichmäßiger Verschleiß der Verschleißteile der Bremsen resultieren. Die Steuerelektronik (3) kann nun so programmiert sein, daß sie dem entgegenwirkt, indem sie grundsätzlich das Druckanforderungssignal zu dem Anhängersteuerventil (4) für einen um die Differenz der Ansprechdrücke höheren Anhängerbremsdruck bemißt. Dementsprechend kann die Steuerelektronik (3) auch so programmiert sein, daß sie im Fall unterschiedlicher Ansprechdrücke der Bremskreise (17, 16, 15) bzw. (18, 19, 20) das Druckanforderungssignal zu dem Druckmodulator des Bremskreises mit dem höheren Ansprechdruck gegenüber dem Druckanforderungssignal zu dem Druckmodulator des anderen Bremskreises entsprechend höher bemißt.

Die vorstehend erwähnte Möglichkeit der Anpassung des Anhängerbremsdrucks an die unterschiedlichen Ansprechdrücke der Motorwagenbremsanlage (M) und der Anhängerbremsanlage (A) ist insbesondere dann von Bedeutung, wenn ein Motorwagen mit verschiedenen Anhängern betrieben wird, weil die Ansprechdrücke der Anhängerbremsanlagen verschiedener Anhänger erheblich streuen können.

Nach einem Wechsel des Anhängers ermittelt die Steuerelektronik (3), wie weiter oben beschrieben, zunächst den Ansprechdruck (pa) des neu angekoppelten Anhängers und nimmt dann die vorstehend beschriebene Anpassung des Druckanforderungssignals zu dem Anhängersteuerventil (4) vor.

Im übrigen gelten die vorstehend für eine Alternative gemachten Ausführungen, sofern sich aus diesen nichts Widersprechendes ergibt, für die andere Alternative direkt oder in entsprechender Anwendung mit.

Der Fachmann erkennt auch, daß der Schutzbereich der Erfindung sich nicht in den vorstehend beispielhaft beschriebenen Ausführungen und Anwendungsmöglichkeiten erschöpft, sondern alle Ausgestaltungen und Anwendungsmöglichkeiten erfaßt, die sich den Patentansprüchen unterordnen.

**Patentansprüche**

1. Verfahren zur Ermittlung des Ansprechdrucks einer durch Druck betätigten Bremse (A) in einem Fahrzeugbremssystem,
   gekennzeichnet durch die Schritte:

   a) Erfassen der vorhandenen Fahrzeugverzögerung als Grund-Fahrzeugverzögerung (a0);
   b) Zuführen eines Drucks (p1) zu der Bremse (A);
   c) Erfassen der nach der Druckzuführung vorhandenen Fahrzeugverzögerung als Test-Fahrzeugverzögerung (a1);
   d) Vergleichen der Grund-Fahrzeugverzögerung (a0) und der Test-Fahrzeugverzögerung (a1);
   e) bei einer Test-Fahrzeugverzögerung (a1), die um mehr als ein vorbestimmter Toleranzwert (s) größer als die Grund-Fahrzeugverzögerung (a0) ist, Wiederholen der Schritte a) bis d) mit verringertem Druck (p1), bis die Differenz zwischen Test-Fahrzeugverzögerung (a1) und Grund-Fahrzeugverzögerung (a0) auf höchstens den vorbestimmten Toleranzwert (s) geschrumpft ist;
   f) bei Gleichheit zwischen Test-Fahrzeugverzögerung (a1) und Grund-Fahrzeugverzögerung (a0) und bei kleinerer Test-Fahrzeugverzögerung (a1) als Grund-Fahrzeugverzögerung (a0) Wiederholen der Schritte a) bis d) mit erhöhtem Druck (p1), bis die Test-Fahrzeugverzögerung (a1) die Grund-Fahrzeugverzögerung (a0) um höchstens den vorbestimmten Toleranzwert (s) übersteigt.

2. Verfahren zur Ermittlung des Ansprechdrucks einer durch Druck betätigten Bremse (A) in einem Fahrzeugbremssystem,
   gekennzeichnet durch die Schritte:

   a) Zuführen eines Drucks (p1) zu der Bremse (A);
   b) Erfassen der nach der Druckzuführung vorhandenen Fahrzeugverzögerung als Test-Fahrzeugverzögerung (a1);
   c) Druckentlastung der Bremse (A);
   d) Erfassen der jetzt vorhandenen Fahrzeugverzögerung als Grund-Fahrzeugverzögerung (a0);
   e) Vergleichen der Grund-Fahrzeugverzögerung (a0) und der Test-Fahrzeugverzögerung (a1);
   f) bei einer Test-Fahrzeugverzögerung (a1), die um mehr als ein vorbestimmter Toleranzwert (s) größer als die Grund-Fahrzeugverzögerung (a0) ist, Wiederholen der Schritte a) bis e) mit verringertem Druck (p1), bis die Differenz zwischen Test-Fahrzeugverzögerung (a1) und Grund-Fahrzeugverzögerung (a0) auf höchstens den vorbestimmten Toleranzwert (s) geschrumpft ist;

g) bei Gleichheit zwischen Test-Fahrzeugverzögerung (a1) und Grund-Fahrzeugverzögerung (a0) und bei kleinerer Test-Fahrzeugverzögerung (a1) als Grund-Fahrzeugverzögerung (a0) Wiederholen der Schritte a) bis e) mit erhöhtem Druck (p1), bis die Test-Fahrzeugverzögerung (a1) die Grund-Fahrzeugverzögerung (a0) um höchstens den vorbestimmten Toleranzwert (s) übersteigt.

3. Verfahren nach Anspruch 1, wobei die Bremse (A) eine erste Bremse und der dieser zugeführte Druck (p1) ein erster Druck sind und das Fahrzeugbremssystem auch eine durch einen zweiten Druck (p15, p20) betätigte zweite Bremse (M) enthält,
gekennzeichnet durch die Schritte:

a) Zuführen des zweiten Drucks (p15, p20) zu der zweiten Bremse (M);
b) Druckentlastung der zweiten Bremse (M);
c) Aufrechterhalten des ersten Drucks (p1) für eine vorbestimmte Nachlaufzeit (tn);
d) Erfassen der Test-Fahrzeugverzögerung (a1) während der Nachlaufzeit (tn).

4. Verfahren nach Anspruch 2, wobei die Bremse (A) eine erste Bremse und der dieser zugeführte Druck (p1) ein erster Druck sind und das Fahrzeugbremssystem auch eine durch einen zweiten Druck (p15, p20) betätigte zweite Bremse (M) enthält,
gekennzeichnet durch die Schritte:

a) Zuführen des zweiten Drucks (p15, p20) zu der zweiten Bremse (M);
b) Druckentlastung der zweiten Bremse (M);
c) Aufrechterhalten des ersten Drucks (p1) für eine vorbestimmte Nachlaufzeit (tn);
d) Erfassen der Test-Fahrzeugverzögerung (a1) während der Nachlaufzeit (tn);
e) Erfassen der Grund-Fahrzeugverzögerung (a0) nach Ablauf der Nachlaufzeit (tn).

5. Verfahren nach einem der Ansprüche 3 oder 4, wobei das das Fahrzeugbremssystem aufweisende Fahrzeug ein Fahrzeugzug mit einem Motorwagen und einem Anhänger, die erste Bremse eine Anhängerbremsanlage (A), die zweite Bremse eine Motorwagenbremsanlage (M) und der erste Druck (p1) der von der Motorwagenbremsanlage (M) an die Anhängerbremsanlage (A) abgegebene Anhängerbremsdruck sind.

6. Verfahren nach einem der Ansprüche 3 bis 5,
dadurch gekennzeichnet,
daß der erste Druck (p1) gegenüber dem zweiten Druck (p15, p20) nach Maßgabe des ermittelten Ansprechdrucks (pa) verändert wird.

**Claims**

1. Method for determining the response pressure of a pressure-actuated brake (A) in a vehicle braking system,
characterised by the following steps:

a) ascertaining, as the basic vehicle deceleration (a0), the vehicle deceleration present;

b) supplying a pressure (p1) to the brake (A);

c) ascertaining, as the vehicle deceleration on testing (a1), the vehicle deceleration present after the supply of pressure;

d) comparing the basic vehicle deceleration (a0) and the vehicle deceleration on testing (a1);

e) if the vehicle deceleration on testing (a1) is greater than the basic vehicle deceleration (a0) by more than a predetermined tolerance value (s), repeating steps a) to d) using a reduced pressure (p1) until the difference between the vehicle deceleration on testing (a1) and the basic vehicle deceleration (a0) has decreased to not more than the pre-determined tolerance value (s);

f) if the vehicle deceleration on testing (a1) and the basic vehicle deceleration (a0) are equal or if the vehicle deceleration on testing (a1) is less than the basic vehicle deceleration (a0), repeating steps a) to d) using an increased pressure (p1) until the vehicle deceleration on testing (a1) exceeds the basic vehicle deceleration (a0) by not more than the pre-determined tolerance value (s).

2. Method for determining the response pressure of a pressure-actuated brake (A) in a vehicle braking system, characterised by the following steps:

    a) supplying a pressure (p1) to the brake (A);

    b) ascertaining, as the vehicle deceleration on testing (a1), the vehicle deceleration present after the supply of pressure;

    c) relieving the brake (A) of pressure;

    d) ascertaining, as the basic vehicle deceleration (a0), the vehicle deceleration now present;

    e) comparing the basic vehicle deceleration (a0) and the vehicle deceleration on testing (a1);

    f) if the vehicle deceleration on testing (a1) is greater than the basic vehicle deceleration (a0) by more than a pre-determined tolerance value (s), repeating steps a) to e) using a reduced pressure (p1) until the difference between the vehicle deceleration on testing (a1) and the basic vehicle deceleration (a0) has decreased to not more than the pre-determined tolerance value (s);

    g) if the vehicle deceleration on testing (a1) and the basic vehicle deceleration (a0) are equal or if the vehicle deceleration on testing (a1) is less than the basic vehicle deceleration (a0), repeating steps a) to e) using an increased pressure (p1) until the vehicle deceleration on testing (a1) exceeds the basic vehicle deceleration (a0) by not more than the pre-determined tolerance value (s).

3. Method according to claim 1, wherein the brake (A) is a first brake and the pressure (p1) supplied thereto is a first pressure and the vehicle braking system also comprises a second brake (M) actuated by a second pressure (p15, p20), characterised by the following steps:

    a) supplying the second pressure (p15, p20) to the second brake (M);

    b) relieving the second brake (M) of pressure;

    c) maintaining the first pressure (p1) for a pre-determined follow-on period (tn);

    d) ascertaining the vehicle deceleration on testing (a1) during the follow-on period (tn).

4. Method according to claim 2, wherein the brake (A) is a first brake and the pressure (p1) supplied thereto is a first pressure and the vehicle braking system also comprises a second brake (M) actuated by a second pressure (p15, p20), characterised by the following steps:

    a) supplying the second pressure (p15, p20) to the second brake (M);

    b) relieving the second brake (M) of pressure;

    c) maintaining the first pressure (p1) for a pre-determined follow-on period (tn);

    d) ascertaining the vehicle deceleration on testing (a1) during the follow-on period (tn);

    e) ascertaining the basic vehicle deceleration (a0) after the end of the follow-on period (tn).

5. Method according to either claim 3 or claim 4, wherein the vehicle having the vehicle braking system is a vehicle train having a motor vehicle and a trailer, the first brake is a trailer braking system (A), the second brake is a motor vehicle braking system (M), and the first pressure (p1) is the trailer braking pressure delivered from the motor vehicle braking system (M) to the trailer braking system (A).

**6.** Method according to any one of claims 3 to 5,
<u>characterised in that</u>
the first pressure (p1) undergoes modification with respect to the second pressure (p15, p20) as a function of the response pressure (pa) determined.

**Revendications**

**1.** Procédé pour déterminer la pression de réaction d'un frein (A) actionné par une pression, dans un système de freinage de véhicule,
caractérisé par les étapes suivantes :

a) on détermine la décélération réelle du véhicule en tant que décélération de base (a0) ;
b) on admet une pression (p1) au frein (A) ;
c) on détermine la décélération réelle du véhicule après admission de pression, en tant que décélération test (a1) ;
d) on compare la décélération de base (a0) et la décélération test (a1) ;
e) pour une décélération test (a1), qui est supérieure à la décélération de base (a0) de plus d'une valeur de tolérance prédéterminée (s), on répète les étapes a) à d) avec une pression réduite (p1), jusqu'à ce que la différence entre la décélération test (a1) et la décélération de base (a0) soit réduite au maximum à la valeur de tolérance prédéterminée (s) ;
f) en cas d'égalité entre la décélération test (a1) et la décélération de base (a0), et pour une décélération test (a1) qui est inférieure à la décélération de base (a0), on répète les étapes a) à d) avec une pression accrue (p1), jusqu'à ce que la décélération test (a1) dépasse la décélération de base (a0) au maximum de la valeur de tolérance prédéterminée (s).

**2.** Procédé pour déterminer la pression de réaction d'un frein (A) actionné par une pression, dans un système de freinage de véhicule,
caractérisé par les étapes suivantes :

a) on admet une pression (p1) au frein (A) ;
b) on détermine la décélération réelle du véhicule après admission de la pression, en tant que décélération test (a1) ;
c) on décharge la pression du frein (A) ;
d) on détecte la décélération réelle actuelle du véhicule en tant que décélération de base (a0) ;
e) on compare la décélération de base (a0) et la décélération test (a1) ;
f) pour une décélération test (a1), qui est supérieure à la décélération de base (a0) de plus d'une valeur de tolérance prédéterminée (s), on répète les étapes a) à e) avec une pression réduite (p1), jusqu'à ce que la différence entre la décélération test (a1) et la décélération de base (a0) soit réduite au maximum à la valeur de tolérance prédéterminée (s) ;
g) en cas d'égalité entre la décélération test (a1) et la décélération de base (a0), et pour une décélération test (a1) qui est inférieure à la décélération de base (a0), on répète les étapes a) à e) avec une pression accrue (p1), jusqu'à ce que la décélération test (a1) dépasse la décélération de base (a0) au maximum de la valeur de tolérance prédéterminée (s).

**3.** Procédé selon la revendication 1, dans lequel le frein (A) est un premier frein, et la pression admise à celui-ci (p1) est une première pression, et le système de freinage de véhicule contient également un deuxième frein (M) actionné par une deuxième pression (p15, p20),
caractérisé par les étapes suivantes :

a) on admet la deuxième pression (p15, p20) au deuxième frein (M) ;
b) on décharge la pression du deuxième frein (M) ;
c) on maintient la première pression (p1) pendant un retard prédéterminé (tn) ;
d) on détecte la décélération test du véhicule (a1) pendant le retard (tn).

**4.** Procédé selon la revendication 2, dans lequel le frein (A) est un premier frein, et la pression admise à celui-ci (p1) est une première pression, et le système de freinage de véhicule contient également un deuxième frein (M) actionné par une deuxième pression (p15, p20),
caractérisé par les étapes suivantes :

a) on admet la deuxième pression (p15, p20) au deuxième frein (M) ;

b) on décharge la pression du deuxième frein (M) ;

c) on maintient la première pression (p1) pendant un retard prédéterminé (tn) ;

d) on détecte la décélération test du véhicule (a1) pendant le retard (tn) ;

e) on détecte la décélération de base du véhicule (a0) après expiration du retard (tn).

5. Procédé selon l'une des revendications 3 et 4, dans lequel le véhicule qui comporte système de freinage est un train routier avec une motrice et une remorque, le premier frein est une installation de freinage de remorque (A), le deuxième frein est une installation de freinage de motrice (M), et la première pression (p1) est la pression de freinage de remorque fournie à l'installation de freinage de remorque (A) par l'installation de freinage de motrice (M).

6. Procédé selon l'une des revendications 3 à 5, caractérisé en ce que la première pression (p1) est modifiée par rapport à la deuxième pression (p15, p20) dans la mesure de la pression de réaction déterminée (pa).

M

A

2

3

4

5

6

7

8

9

1

20 19 18 17 16 15 14 13 12 11 10

EP 0 733 532 B1

FIG.1

FIG.2

FIG.3

FAHRZEUG-VERZOEGERUNG

DRUCK

Zeit

Zeit

I  II  III

EP 0 733 532 B1